Europäisches Patentamt

(19) European Patent Office  (11) Veröffentlichungsnummer: **0 274 610**
**B1**

Office européen des brevets

(12) **EUROPÄISCHE PATENTSCHRIFT**

(45) Veröffentlichungstag der Patentschrift: (51) Int. Cl.⁴: **B60T 8/34**, B60T 8/84
 **14.03.90**

(21) Anmeldenummer: **87116828.2**

(22) Anmeldetag: **14.11.87**

(54) **Fahrzeug mit Antiblockiersystem und Antriebsschlupfregelung.**

(30) Priorität: **13.01.87  DE 3700716**

(43) Veröffentlichungstag der Anmeldung:
 **20.07.88 Patentblatt 88/29**

(45) Bekanntmachung des Hinweises auf die Patenterteilung:
 **14.03.90 Patentblatt 90/11**

(84) Benannte Vertragsstaaten:
 **DE FR GB IT SE**

(56) Entgegenhaltungen:
 **EP-A- 0 203 346**
 **DE-A- 2 545 593**
 **DE-A- 3 201 045**

(73) Patentinhaber: **WABCO Westinghouse
 Fahrzeugbremsen GmbH, Am Lindener
 Hafen 21 Postfach 91 12 80, D-3000 Hannover 91(DE)**

(72) Erfinder: **Löhmann, Berthold, Dipl.-Ing., Pariweg 9,
 D-3000 Hannover 21(DE)**
 Erfinder: **Petersen, Erwin, Dr.-Ing., Fliederweg 22,
 D-3050 Wunstorf 1(DE)**

(74) Vertreter: **Schrödter, Manfred, WABCO Westinghouse
 Fahrzeugbremsen GmbH Am Lindener
 Hafen 21 Postfach 91 12 80, D-3000 Hannover 91(DE)**

**Beschreibung**

Die Erfindung bezieht sich auf ein Fahrzeug mit Antiblockiersystem (ABS) und Antriebsschlupfregelung (ASR) gemäß dem Oberbegriff des Patentanspruchs 1.

Ein mit derartigen Systemen ausgerüstetes Fahrzeug ist z.B. aus dem VDI-Tagungsbericht "Elektronik im Kraftfahrzeug" 9./10. Oktober 1986, bekannt.

Antiblockiersysteme haben die Aufgabe, ein Blockieren der gebremsten Räder, insbesondere auf glatter Straße, zu verhindern und so die Lenkbarkeit des Fahrzeugs zu erhalten. Hierzu werden die Bremsmomente bei beginnender Blockierneigung reduziert und anschließend wieder erhöht. Die Steuerung der Bremsen übernimmt dabei eine spezielle Elektronik, die meist 4-kanalig aufgebaut ist. Das bedeutet, daß bei einem zweiachsigen Fahrzeug für jedes Rad ein eigener Elektronikkanal zur Verfügung steht. Für dreiachsige Fahrzeuge sind auch 6-kanalige Elektroniken üblich, diese sind jedoch aufwendig und vor allem wegen der geringeren Stückzahlen nicht so kostengünstig.

Ergänzend zum Antiblockiersystem sind Antriebsschlupfregelungen bekannt, welche ein Durchdrehen der Antriebsräder beim Anfahren und in der Beschleunigungsphase des Fahrzeugs verhindern. Hierdurch wird das Anfahren erleichtert bzw. die Seitenführungskraft des Fahrzeugs bei beschleunigter Fahrt verbessert. Antriebsschlupfregelungen werden meist als Ergänzung eines bereits eingebauten Antiblockiersystems vorgesehen und benutzen wesentliche Bauteile des Antiblockiersystems wie Regelventile, Radsensoren und Elektronik, mit.

Es ist dabei üblich, bei einem Antriebsschlupfregelsystem das zuerst durchdrehende Antriebsrad (Low-Rad) durch betätigen der zugehörigen Radbremse bis fast auf die Fahrzeuggeschwindigkeit abzubremsen. Durch diese "Differentialbremsregelung" überträgt sich über das Differential-Getriebe das Drehmoment des Motors verstärkt auch auf das zweite, auf guter Straße laufende Rad (High-Rade). Das Fahrzeug kann sich somit auf dem High-Rad "abstützen" und anfahren bzw. beschleunigen.

Die erwähnte Abbremsung des Low-Rades erfolgt dann, wenn dieses Rad eine festgelegte Geschwindigkeitsdifferenz- oder Schlupf-Schwelle (z. B. 6 %) überschreitet. Die Bremse wird wieder gelöst, wenn diese Schwelle wieder unterschritten ist. Eine Abbremsung bis unter die Fahrzeuggeschwindigkeit muß selbstverständlich unbedingt vermieden werden.

Sollte auch das High-Rad durchdrehen, wird über einen automatischen Eingriff in das Gasgestänge des Motors dessen Leistung reduziert, und zwar unabhängig vom Willen des Fahrers.

Es besteht nun ein Problem, wenn aus Kostengründen eine 4-kanalige ABS/ASR Elektronik in ein Dreiachsfahrzeug mit einer Antriebsachse und einer nicht angetriebenen Vor- oder Nachlaufachse eingebaut ist. Dabei sind die Räder der Vor- bzw. Nachlaufachse nicht sensiert.

Bei dieser Anordnung dürfen natürlich beim geregelten Anfahren die bremsdruckmäßig normalerweise an die Bremszylinder der Antriebsachse angehängten Bremszylinder der Vor- oder Nachlaufachse nicht mit eingebremst werden, da sonst das Anfahren noch weiter erschwert werden würde.

Hier greift die Erfindung ein. Ihr liegt die Aufgabe zugrunde, die Räder der Vor- oder Nachlaufachse auf möglichst einfache Weise beim geregelten Anfahren druckmäßig von den Rädern der Antriebsachse abzukoppeln.

Dabei muß jedoch bei einer geregelten Bremsung die seitenweise Ankopplung erhalten bleiben, so daß die Räder der Vor- oder Nachlaufachse ihren Beitrag zur Abbremsung des Fahrzeugs leisten können. Dieser Beitrag soll möglichst auch die Wirkung einer bloßen Select-low-Bremsung übertreffen.

Eine Anordnung, bei der eine Nachlaufachse über ein Select-low-Ventil an die Antriebsachse angekoppelt ist, ist aus der DE-A 31 01 731, Fig. 2, bekannt. Hier ist jedoch keine ASR-Funktion enthalten.

Die o. g. Aufgabe wird durch die in den Patentansprüchen 1 bis 3 enthaltene Erfindung gelöst. Die Unteransprüche enthalten zweckmäßige Weiterbildungen der Erfindung.

Die Erfindung wird nachfolgend anhand von Ausführungsbeispielen, die in einer Zeichnung schematisch dargestellt sind, näher erläutert.

Die Zeichnung zeigt in

Fig. 1 als Blockschaltbild eine erste Ausführung eines ABS/ASR-Systems,
Fig. 1a, 1b Einzelheiten aus der Fig. 1,
Fig. 2 eine zweite Ausführung eines ABS/ASR-Systems.

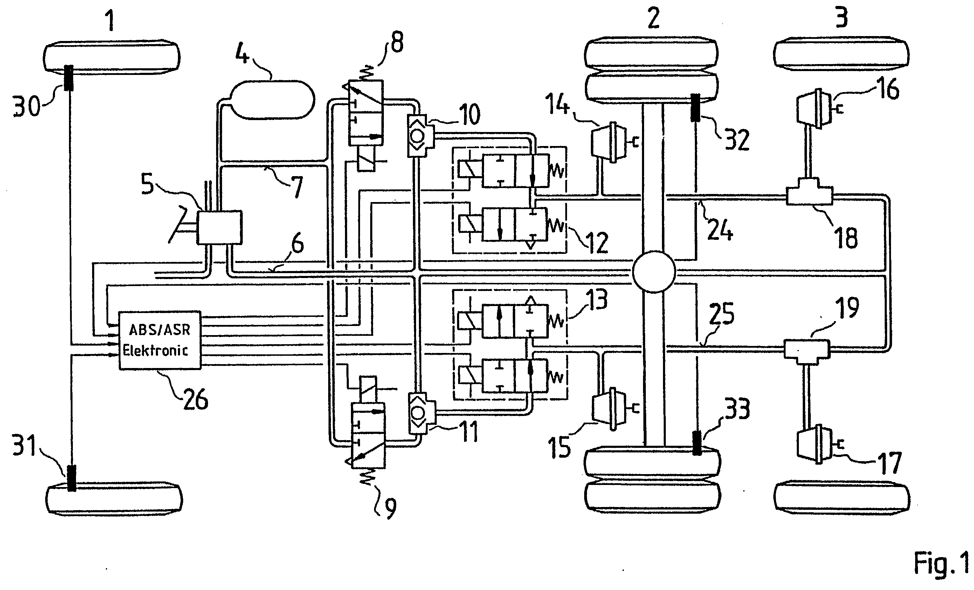

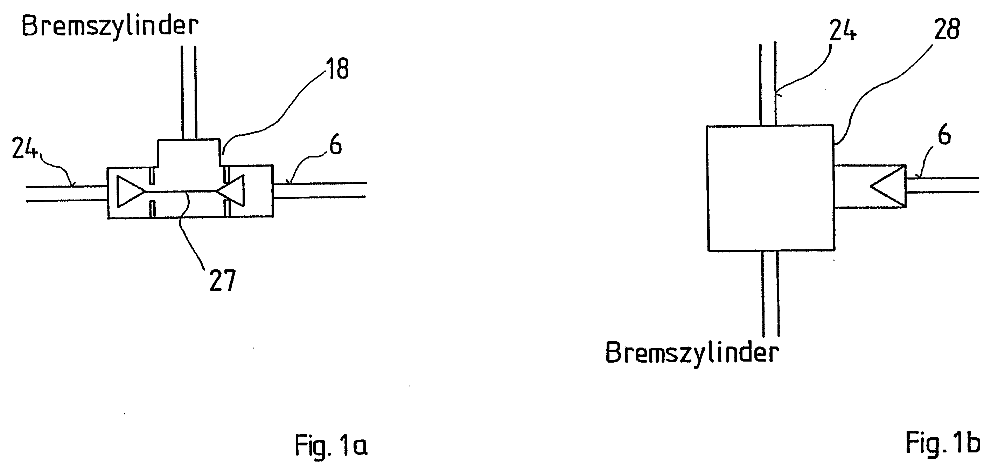

In der Fig. 1 ist schematisch die Bremsanlage eines Nutzfahrzeugs dargestellt. Teile, die für die Erfindung unwesentlich sind, sind weggelassen.

Das Fahrzeug besitzt drei Achsen (1, 2, 3), von denen die erste lenkbar ist, die zweite als Antriebsachse, und die dritte als Nachlaufachse ausgebildet ist. Die Räder der Achsen (1) und (2) sind sensiert, d. h. mit Sensoren (30 bis 33) zur Erfassung ihrer Drehzahl ausgerüstet. Aus den Drehzahlen der sensierten Räder erkennt eine 4-kanalige ABS/ASR Elektronik (26), ob an diesen Rädern beim Bremsen oder beim Anfahren ein unzulässiger Schlupf auftritt.

Die Elektronik (26) ist weiter elektrisch mit Differential-Bremsventilen (8, 9) sowie Regelventilen (12, 13) verbunden.

Der pneumatische Teil der gezeigten Bremsanlage besteht aus einem Luftvorratsbehälter (4), der an ein Trittplatten-Bremsventil (5) angeschlossen ist, von welchem wiederum über eine Bremsleitung (6) Druckluft zu den Bremszylindern (14, 15) der Antriebsachse (2) sowie den Bremszylindern (16, 17) der Nachlaufachse (3) zuführbar ist. Die Druckluft gelangt dabei über Zweiwegeventile (10, 11), welche jeweils den höheren der beiden anstehenden Drücke durchlassen (Select-high-Ventile) sowie über ABS-Regelventile (12, 13) zunächst zu den Bremszylindern (14, 15) der angetriebenen Achse (2).

Den normalerweise den Bremszylindern (14, 15) der Antriebsachse (2) seitenweise parallel geschalteten Bremszylindern (16, 17) der Nachlaufachse (3) sind hier je ein Doppel-Absperrventil (18, 19) vorgeschaltet. Der zweite Eingangsanschluß der Doppel-Absperrventile (18, 19) ist an die Bremsleitung (6) angeschlossen. Die Ventile (18, 19) lassen jeweils den niedrigeren der beiden an den Eingängen stehenden Drücke durch (Select-low-Ventile).

Der Druckluftvorratsbehälter (4) ist weiter über eine direkte, das Bremsventil (5) umgehende Leitung (7) an die beiden Differentialbremsventile (8, 9) angeschlossen. Der Ausgang der Differentialbremsventile (8, 9) ist an den zweiten Eingangsanschluß der bereits erwähnten Zweiwegeventile (10, 11) angeschlossen.

Im folgenden wird die Funktion der in der Fig. 1 dargestellten ABS/ASR-Bremsanlage näher erläutert.

Bei einer ungeregelten Teilbremsung gelangt die Druckluft aus dem Behälter (4) über das Bremsventil (5), die Zweiwegeventile (10, 11), und die Regelventile (12, 13) zu den Bremszylindern (14, 15) der Antriebsachse sowie weiter über die Leitungen (24, 25) und die Doppelabsperrventile (18, 19) zu den Bremszylindern (16, 17) der Nachlaufachse. An den Doppelabsperrventilen (18, 19) steht in diesem Fall an beiden Eingängen der gleiche Druck an. Dieser Druck wird, wie weiter unten (Fig. 1a) näher erläutert wird, in gleicher Höhe durchgelassen. Die Regelventile (12, 13) befinden sich dabei in der (gezeichneten) auf Durchlaß geschalteten Stellung.

Bei einer geregelten Bremsung, d. h. mit arbeitendem ABS-System, ist der Verlauf der Druckluft-Strömung grundsätzlich wie oben beschrieben, mit dem einzigen Unterschied, daß jetzt die Regelventile (12, 13) von der Elektronik (26) angesteuert werden, d. h. abwechselnd je nach Schlupf-Zustand der Antriebsräder abwechselnd geöffnet und geschlossen werden. Durch diesen geregelten Bremsdruck werden über die Leitungen (24, 25) auch die seitenweise angehängten Bremszylinder (16, 17) der Nachlaufachse (3) mitgesteuert. Da jetzt an den zweiten Eingangsanschlüssen der Doppelabsperrventile (18, 19), die mit der Bremsleitung (6) verbunden sind, stets der maximale Bremsdruck ansteht, sind diese in diesem Fall so geschaltet, daß eine ungehinderte seitenweise Verbindung der Bremszylinder gewährleistet ist. Hierdurch ist gewährleistet, daß sowohl die Räder der Antriebsachse (2) als auch die Räder der Nachlaufachse (3) einen Beitrag zur Abbremsung leisten können.

Bei einem ASR-Anfahr-Vorgang schließlich wird durch die ABS/ASR Elektronik (26) eines der Differentialbremsventile (8, 9) geöffnet. Hierdurch kann die Druckluft aus dem Behälter (4) über die Leitung (7) durch eines der beiden Differentialbremsventile (8) oder (9), sowie das benachbarte Zweiwegeventil (10) oder (11) und das angeschlossene Regelventil (12) oder (13) zu dem Bremszylinder (14) oder (15) des gerade durchdrehenden Rades der Antriebsachse (2) strömen und dieses abbremsen.

In diesem Fall darf natürlich das seitenweise angehängte Rad bzw. dessen Bremszylinder (16, 17) nicht mit eingebremst werden, da hierdurch der Anfahr-Vorgang noch weiter erschwert werden würde.

Da in diesem Fall die Bremsleitung (6) drucklos ist, sperrt das jeweilige Doppelabsperrventil (18) oder (19) die jeweilige Verbindungsleitung (24) oder (25) ab, so daß im Fall der ASR-Regelung die seitenweise Mitsteuerung in gewünschter Weise unterbrochen ist.

Anzumerken ist ferner, daß diese Anordnung sowohl das Einbremsen nur eines Antriebsrades als auch das Einbremsen beider Antriebsräder während der Antriebsschlupfregelung ermöglicht, ohne das die nicht angetriebenen Räder mit eingebremst werden. Ein beidseitiges Einbremsen kann in bestimmten Fällen vorteilhaft sein, z. B. bei Automatik-Getrieben.

In der Fig. 1a ist schematisch der innere Aufbau des Doppel-Absperrventils (18) dargestellt. Man erkennt, daß durch den höheren der beiden an den Eingangsleitungen (6) oder (24) anstehenden Drücke ein Kolben (27) so verschoben wird, daß nur der niedrigere anstehende Druck in Richtung zu dem angeschlossenen Bremszylinder BZ durchgelassen wird.

Anstelle der Doppelabsperrventile (18, 19) kann auch wahlweise das in der Fig. 1b dargestellte Relaisventil (28) in gleicher Verschaltung eingesetzt werden.

Relaisventile sind als Standardgeräte aus Bremsanlagen bekannt. Ausgelegt auf ein Übersetzungsverhältnis von 1 : 1 wird der an dem Vorratsanschluß (Leitung 24) anliegende Druck bis zu der am Steueranschluß (Leitung 6) anstehenden Druckhöhe zu dem Verbraucheranschluß (BZ) durchgesteuert. Dabei kann der ausgesteuerte Druck naturgemäß nicht über den Vorrats- bzw. Versorgungsdruck steigen, so daß wie bei dem Doppelabsperrventil (18) der jeweils niedrigere der über die Leitungen (6) und (24) zugeführte Druck auch an dem Verbraucheranschluß (BZ) und somit in dem Bremszylinder des nicht angetriebenen Rades herrscht.

Relaisventile sind an sich bauaufwendiger als Doppelabsperrventile, können jedoch aus Gründen der Gerätestandardisierung bevorzugt werden.

Es kann auch vorteilhaft sein, die Bremsleitung (6) an den Vorratsanschluß und die Leitung (24) an den Steueranschluß des Relaisventils (28) anzuschließen. Dann brauchen die ABS-Regelventile (12, 13) nur jeweils das Volumen eines Bremszylinders (14) bzw. (15) und der jeweiligen Relaisventilsteuerkammer zu versorgen.

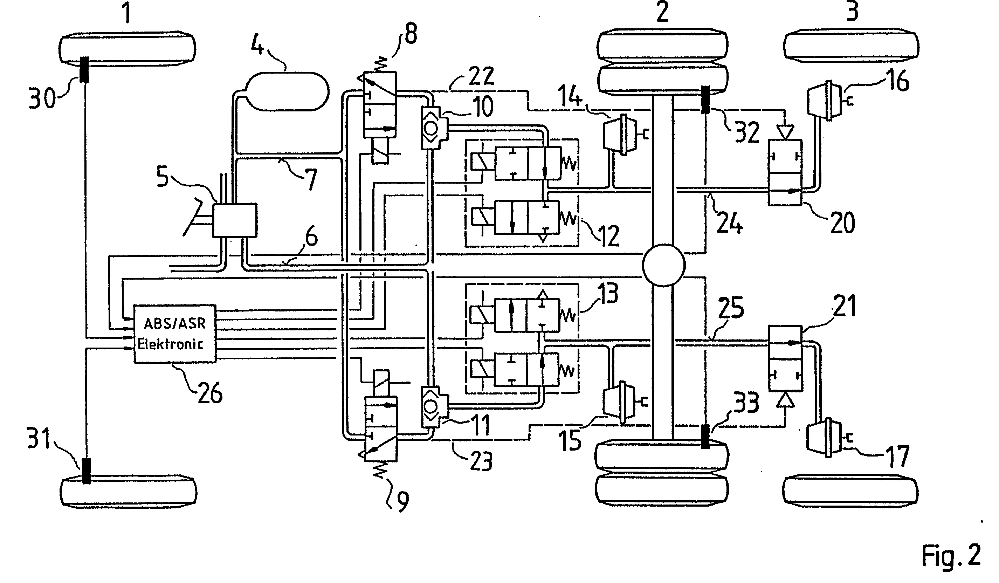

In der Fig. 2 ist eine Variante der Blockschaltung zu Fig. 1 dargestellt. Der einzige Unterschied zur Fig. 1 besteht darin, daß die seitenweise Verbindung der Bremszylinder in diesem Fall über je ein 2/2- (oder 3/2-) Wegeventil (20, 21) unterbrechbar ist. Durch diese "Absperrventile" kann ebenfalls, wie oben beschrieben, die Mitsteuerung der Bremszylinder (16, 17) der Nachlaufachse (3) im Fall eines ASR-geregelten Anfahrvorganges verhindert werden.

Die Ansteuerung der Absperrventile (20, 21) erfolgt wie gezeichnet über Leitungen (22, 23), welche seitenweise an die Ausgänge der Differentialbremsventile (8, 9) angeschlossen sind.

Wahlweise kann eine Ansteuerung der Absperrventile (20, 21) natürlich auch über ein Ansteuersignal der ABS/ASR Elektronik (26) erfolgen. Hierzu müssen die Absperrventile (20, 21) ais Magnetventile ausgebildet sein (nicht dargestellt). Die Ausführung nach der Fig. 2 bedeutet einen etwas höheren schaltungstechnischen Aufwand als die Ausführung nach der Fig. 1.

**Patentansprüche**

1. Fahrzeug mit Antiblockiersystem (ABS) und Antriebsschlupfregelung (ASR), insbesondere Nutzfahrzeug, das mit einer Antriebsachse (2) und einer nicht angetriebenen Vor- oder Nachlaufachse (3) versehen ist, und das mit einer vorzugsweise vierkanaligen ABS/ASR Elektronik (26) ausgerüstet ist, gekennzeichnet durch folgende Merkmale:
   a) Zwischen die Bremszylinder (14, 16), (15, 17) von Antriebsachse (2) und Vor- oder Nachlaufachse (3) ist auf jeder Seite ein Doppelabsperrventil (Select-low-Ventil) (18, 19) geschaltet;
   b) beide Doppelabsperrventile (18, 19) sind gemeinsam von einer Bremsleitung (6) her ansteuerbar (Fig. 1).

2. Fahrzeug mit Antiblockiersystem (ABS) und Antriebsschlupfregelung (ASR), insbesondere Nutzfahrzeug, das mit einer Antriebsachse (2) und einer nicht angetriebenen Vor- oder Nachlaufachse (3) versehen ist, und das mit einer vorzugsweise vierkanaligen ABS/ASR-Elektronik (26) ausgerüstet ist, gekennzeichnet durch folgende Merkmale:
   a) Zwischen die Bremszylinder (14, 16), (15, 17) von Antriebsachse (2) und Vor- oder Nachlaufachse (3) ist auf jeder Seite ein Relaisventil (28) geschaltet;
   b) beide Relaisventile sind gemeinsam von einer Bremsleitung (6) her ansteuerbar.

3. Fahrzeug mit Antiblockiersystem (ABS) und Antriebsschlupfregelung ASR, insbesondere Nutzfahrzeug, das mit einer Antriebsachse (2) und einer nicht angetriebenen Vor- oder Nachlaufachse (3) versehen ist, und das mit einer vorzugsweise vierkanaligen ABS/ASR-Elektronik (26) ausgerüstet ist, gekennzeichnet durch folgendes Merkmal:
In die zu den Bremszylindern (16, 17) der Nachlaufachse (3) führenden Bremsleitungen (24, 25) ist je ein elektronisch oder pneumatisch angesteuertes Absperrventil (20, 21) eingefügt (Fig. 2).

4. Fahrzeug nach Anspruch 3, dadurch gekennzeichnet, daß die pneumatische Ansteuerung der Absperrventile (20, 21) über Leitungen (22, 23) erfolgt, die zum Ausgangsanschluß von Differential-Bremsventilen (8, 9) führen.

5. Fahrzeug nach Anspruch 3, dadurch gekennzeichnet, daß die elektronische Ansteuerung der Absperrventile (20, 21) durch die ABS/ASR-Elektronik (26) erfolgt.

**Revendications**

1. Véhicule équipé d'un système anti-blocage (ABS) et d'un régulation du glissement en propulsion ou anti-patinage (ASR), en particulier, véhicule utilitaire, qui est muni d'un essieu moteur (2) et d'un essieu porteur avant ou arrière (3) non moteur, et qui est équipé d'une unité électronique ABS/ASR (26), de préférence à 4 canaux, caractérisé par les traits caractéristiques suivants:
   a) sur chaque côté, une valve d'arrêt double (valve de sélection basse ou "Select-low") (18, 19) est intercalée entre les cylindres de freins (14, 16), (15, 17) de l'essieu moteur (2) et de l'essieu porteur avant ou arrière (3);
   b) les deux valves d'arrêt doubles (18, 19) peuvent être commandées conjointement par une conduite de freinage (6) (figure 1).

2. Véhicule équipé d'un système anti-blocage (ABS) et d'une régulation du glissement en propulsion ou anti-patinage (ASR), en particulier, véhicule utilitaire, qui est muni d'un essieu moteur (2) et d'un essieu porteur avant ou arrière (3) non moteur, et qui est équipé d'une unité électronique ABS/ASR (26), de préférence à 4 canaux, caractérisé par les traits caractéristiques suivants:
   a) de chaque côté, une valve relais (28) est interposée entre les cylindres de freins (14, 16), (15, 17) de l'essieu moteur (2) et de l'essieu porteur avant ou arrière (3);
   b) les deux valves relais peuvent être commandées conjointement par une conduite de frein (6).

3. Véhicule équipé d'un système anti-blocage (ABS) et d'une régulation du glissement en propulsion ou anti-patinage (ASR), en particulier, véhicule utilitaire, qui est muni d'un essieu moteur (2) et d'un essieu porteur avant ou arrière (3) non moteur, et qui est équipé d'une unité électronique ABS/ASR (26), de préférence à 4 canaux, caractérisé par le trait caractéristique suivant:
une valve d'arrêt (20, 21), à commande électronique ou pneumatique, est intercalée dans chacune des conduites de freinage (24, 25) qui mènent aux cylindres de freins (16, 17) de l'essieu porteur arrière (3) (figure 2).

4. Véhicule selon la revendication 3, caractérisé en ce que la commande pneumatique des valves d'arrêt (20, 21) s'effectue par l'intermédiaire de conduites (22, 23) qui mènent au raccord de sortie de valves de freinage différentiel (8, 9).

5. Véhicule selon la revendication 3, caractérisé en ce que la commande électronique des valves d'arrêt (20, 21) est assuré par l'unité électronique ABS/ASR (26).

**Claims**

1. A vehicle with an antiskid system (ABS) and a drive slip control (ASR), in particular a commercial vehicle, which is provided with a driving axle (2) and a non-driven leading or trailing axle (3), and which is equipped with a preferably quadruple-channel ABS/ASR electronics system (26), characterized by the following features:

a) between the brake cylinders (14, 16) (15, 17) of driving axle (2) and leading or trailing axle (3) there is connected on each side a double shutoff valve (select-low valve) (18, 19);

b) both double shutoff valves (18, 19) are jointly controllable from a brake line (6) (Fig. 1).

2. A vehicle with an antiskid system (ABS) and a drive slip control (ASR), in particular a commercial vehicle, which is provided with a driving axle (2) and a non-driven leading or trailing axle (3), and which is equipped with a preferably quadruple-channel ABS/ASR electronics system (26), characterized by the following features:

　　a) between the brake cylinders (14, 16) (15, 17) of driving axle (2) and leading or trailing axle (3) there is connected on each side a relay valve (28);

　　b) both relay valves are jointly controllable from a brake line (6).

3. A vehicle with an antiskid system (ABS) and a drive slip control (ASR), in particular a commercial vehicle, which is provided with a driving axle (2) and a non-driven leading or trailing axle (3), and which is equipped with a preferably quadruple-channel ABS/ASR electronics system (26), characterized by the following feature:

in the brake lines (24, 25) leading to the brake cylinders (16, 17) there is inserted in each case an electronically or pneumatically triggerable shutoff valve (20, 21) (Fig. 2).

4. A vehicle according to claim 3, characterized in that the pneumatic triggering of the shutoff valves (20, 21) is effected via lines (22, 23) which lead to the output port of differential brake valves (8, 9).

5. A vehicle according to claim 3, characterized in that the electronic triggering of the shutoff valves (20, 21) is effected by the ABS/ASR electronics (26).

Fig. 1

EP 0 274 610 B1

28

24

6

Bremszylinder

Fig. 1b

18

6

27

Bremszylinder

24

Fig. 1a

Fig. 2

ABS/ASR
Elektronic

EP 0 274 610 B1